# EUROPEAN PATENT APPLICATION

(11) **EP 2 120 390 A1**
(43) Date of publication of application: **18.11.2009**
(21) Application number: 07816919.0
(22) Date of filing: 18.09.2007
(51) Int. Cl.: H04L 9/08

(54) **A KEY SHARING METHOD AND CORRESPONDING SYSTEM**

(30) Priority: 27.09.2006 CN 200610152283
(71) Applicant: Huawei Technologies Co., Ltd., Shenzhen, Guangdong Province 518129 (CN)
(72) Inventor: LIU, Ya, Guangdong 518129 (CN)
(74) Representative: Gulde Hengelhaupt Ziebig & Schneider
(86) International application number: PCT/CN2007/070719
(87) International publication number: WO 2008/043289

(57) **Abstract**

The present disclosure provides a method and system of key sharing, the method includes: transmitting, by a group member, a key information request to a neighbor group member; transmitting, by the neighbor group member, the requested key information to the group member, upon receiving the key information request. The system includes: a requester group member and a responder group member. With the method and system of the disclosure, it may improve the reliability and availability of group key and/or auxiliary key distribution, which avoids the bottleneck in service performance and network bandwidth that may occur when all the group members obtain the key from the key server.

## Description

### FIELD OF THE INVENTION

The present disclosure relates to the field of network communication, and more particularly, to a method and system of key sharing.

### BACKGROUND

Multiparty communication is a communication scenario with two or more participants, and the scenario with only two participants is a special case of multiparty communication. Generally, there are a plurality of data receivers and one or more data senders in a multiparty communication scenario. Unicasting or multicasting technology may be used to transmit messages in a multiparty communication, which may be realized more easily with multicasting technology than with unicasting technology.

Typical multiparty communication scenarios include remote multiparty conference, IP telephony, IPTV, online network game and network computing etc. Multiparty communication security means providing access control (authorization, authentication) for multiparty communication participants and providing security services such as encryption, integrity protection, replay protection, source authentication and group authentication for communication contents, so as to prevent non-group member from eavesdropping and tampering communication contents or disturbing the normal progress of the communication, and preventing security threats from group members.

Security requirements for a multiparty communication mainly involve:

1. Authorization and authentication. Only permitted people who can prove their identities can join the multiparty communication group and receive/send data, so as to make the multicast group controllable.

2. Confidentiality. Only nodes having a decryption key can interpret contents of group communication messages.

3. Group member authentication. Non-group members can not generate valid authentication information, and they are not able to transmit multicast messages by pretending to be group members.

4. Source authentication (non-repudiation). A group member can not generate authentication information of another group member, and is not able to transmit multicast messages by pretending to be that group member. On the other hand, neither can a group member repudiate that the message is sent by him/her.

5. Anonymity. This is a mechanism for the group members to speak anonymously, that is, a recipient can not tell the identity of the sender from the received multicast messages.

6. Integrity. It provides a means for verifying whether the received multicast messages have been tampered.

7. Anti-replay. It provides a replay-detecting mechanism to protect against replay attack.

Multiparty communication messages are usually transmitted in encryption so as to ensure the security of the multiparty communication. The key for encryption and decryption shared among the multiple parties is only known to the group members, which ensures that only the group members can interpret the encrypted messages. Group member authentication may also be realized with the key, since encrypted multicast messages can be generated correctly only by group members with the key.

The key issue of dealing with security problems in multiparty communication with the multiparty shared key is the generation and distribution of the key. Such generation and distribution must be exclusive, that is, non-group members can not generate or distribute the key. Exclusive sharing of information between multiple parties or two parties is also needed for source authentication, integrity and anonymous service. In a multiparty communication, the realization of exclusive key sharing is a research topic of group key management. A group key is a key shared by all the group members for performing security operation such as encrypting and decrypting multicast messages. The group key management refers mainly to the generation, distribution and update of the group key for group members as well as the related scalability, robustness and reliability issues.

To prevent the disclosure of a group key, the group key must be transmitted in encryption. The current standard method is to use Key Encryption Keys (KEKs) and Traffic Protection Keys (TPKs) to ensure the confidentiality of the group key.

A KEK is shared between a key server and group members. Different KEKs are generated by the key server for different group members, so as to meet the forward/backward encryption requirement in the group key update. In a simple group key management scheme, one KEK is shared between the key server and each group member. During the initial distribution and the update of the group key, the group key is encrypted with the KEK of the current group member and then delivered to the group member. This scheme is easy to realize; but when the keys are updated, the number of encryptions and distributions that the key server has to perform is proportional to the number of group members. As a result, the scheme is of low scalability and rarely used.

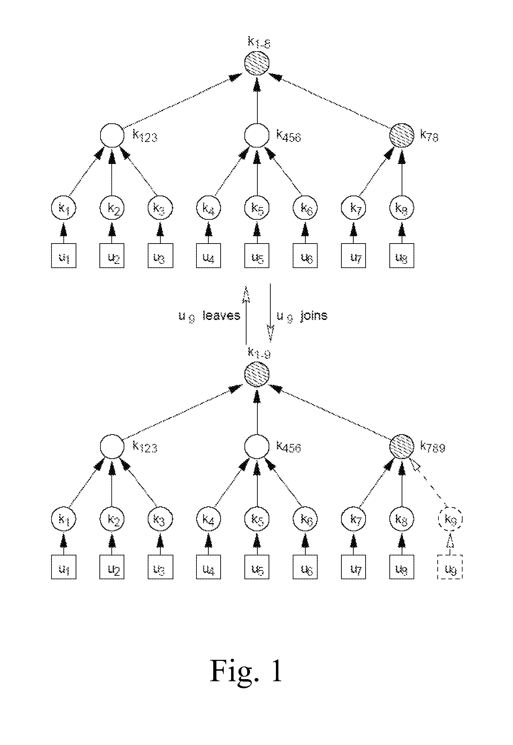

Currently, in relatively advanced group key management schemes, KEKs are usually organized in a hierarchical structure and group key messages are transmitted using IP multicasting in order to reduce the number of encryptions and transmissions performed by the key server and obtain better scalability. The Logical Key Hierarchy (LKH) is a rather developed and standard group key management scheme based on the hierarchical structure in the art. A schematic diagram of the LKH group key management scheme is illustrated in Fig. 1.

In the LKH group key management scheme shown in Fig. 1, the root node (K1-8) corresponds to the group key and the remaining nodes (trunk nodes and leaf nodes) correspond to auxiliary keys. A one-to-one correspondence exists between the leaf nodes and the group members (u1-u9). Each user has all the keys along the path from the leaf node to the root node, and the group key is shared by all the group members. As shown in Fig. 1, u1 has keys k1, k123 and k1-8 and u4 has keys k4, k456 and k1-8 before the group member u9 joins.

In the LKH group key management scheme shown in Fig.1, when a new group member joins or an existing group member leaves, the key server needs to update keys to be known or already known to all the group members.

For example, when u9 joins, the key server updates keys k78 and k1-8 and then transmits the updated keys in encryption to the other group members u1-u8. The specific transmission procedure is as follows: k1-9 is encrypted with k1-8 and transmitted to the users u1 to u8; k789 is encrypted with k78 and transmitted to the users u7 and u8; and keys 1-9 and k789 are encrypted with k9 and transmitted to the user u9.

When u9 leaves, the key server updates keys k789 and k1-9 and then transmits the updated key in encryption to group members u1-u8. The specific transmission procedure is as follows: k789 is encrypted with k78, k78 is encrypted with k7, and then both transmitted to the user u7; k1-8 is encrypted with k123 and transmitted to the users u1 to u3; and key 1-8 is encrypted with k456 and transmitted to u4-u6.

In the LKH group key management scheme described above, the number of encryptions performed by the key server when updating the group key is O (logN), where N is the number of group members. For message transmission, LKH uses by default IP multicast to transmit key update messages and it is proposed to use a group-oriented transmission method. That is, all encrypted key information is encapsulated in a message and transmitted to all the group members using multicast. As a result, the number of transmissions needed when updating the key may be kept a constant.

In addition to the LKH group key management scheme described above, other group key management schemes based on the hierarchical structure may also include OFT, LKH++, etc.

In the LHK group key management scheme described above, the reliability of the key messages must be ensured when the key messages are transmitted by the key server to the group members, in order to prevent the situation from happening that a legitimate group member can not participate in the group communication because he could not receive the group key messages and update the group key and/or auxiliary key. Factors that may affect the reliable transmission of the key messages include: network failure, packet loss due to network congestion, failure of a group member node, short time off-line of a group member node. Currently, the following methods are used to ensure the reliability of the key message distribution.

The first method for ensuring the reliability of key message distribution in the prior art is a method of repeating the transmission of the key messages. In the method, when transmitting key messages to the group members, the key server transmits each key message several times. The group members need to process only the first received key message and may discard all the messages received subsequently. The method applies to both unicast and multicast key distribution methods and is easy to be implemented. The method improves to a certain extent the reliability of the key message update and reduces the possibility of key asynchrony between group members. The method applies to group communication scenario in a local area.

When implementing the present disclosure, the inventor finds the following drawbacks with the first method for ensuring the reliability of key message distribution in the prior art:

1. It can not solve the problem about the reliability of group key distribution fundamentally. When congestion occurs in the network, it is likely that all the repeatedly transmitted messages are discarded and group members would still need to obtain the group key messages using other methods.

2. Bandwidth consumption is increased. It takes a lot of network bandwidth to transmit key messages repeatedly, which is not appropriate in the situation of limited bandwidth.

The second method for ensuring the reliability of key message distribution in the prior art is a group key distribution method based on reliable unicast/multicast. The method introduces time-out re-transmission and reception acknowledgement mechanism between the key server and the group members, which fundamentally realizes the reliable transmission of group key messages. The reliable multicast technology may be applied to schemes using IP multicast to distribute messages, such as LKH.

When implementing the present disclosure, the inventor finds the following drawbacks with the second method for ensuring the reliability of key message distribution in the prior art:

1. The forward acknowledgement mechanism used by the method may lead to acknowledgement message explosion. If ACK is used instead of NAK acknowledgement mechanism, each group member having received the group key message transmits an acknowledgement message. Since the group members receive the group key message at about the same time, if there are a large number of group members, a lot of group members may transmit acknowledgement messages in the same direction almost simultaneously, which may result in a dramatic increase in the number of network messages and deteriorate the network congestion. Furthermore, the key server may not receive all the acknowledgement messages due to the overloaded network.

2. The burden of the key server is increased. Acknowledgement message explosion may overload the key server; besides, the key server also needs to maintain a time-out re-transmission timer for each group member, which increases the burden of the key server. As a result, the group members that a server may serve are limited to a small scale.

A third method for ensuring the reliability of key message distribution in the prior art is a group key distribution method using Forward Error Correction (FEC). The method adds a certain amount of redundant information in the key message, such as repeating the previous message in the subsequent message. Thereby, it is not necessary for the recipient to receive the whole message. In contrast, the recipient may extract the whole message information by receiving only a certain amount of messages. Currently, the solution is a better and relatively general solution which may also apply to other scenarios such as stream media.

When implementing the present disclosure, the inventor finds the following drawbacks with the third method for ensuring the reliability of key message distribution in the prior art: the number of transmissions is increased which in turn increases the transmission burden of the key server. This is because redundant information is added to the message which accordingly increases the message transmission load of the key server.

### SUMMARY

An object of the disclosure is to provide a key distribution method and system which may improve the reliability of key distribution.

The object is realized with the following technical solution.

A method for key sharing includes:

transmitting, by a group member, a key information request to a neighbor group member; and

transmitting, by the neighbor group member, the requested key information to the group member, upon receiving the key information request.

A key sharing system includes:

a requester group member, adapted to transmit a key information request to a responder group member having a neighbor relationship with the requester group member; and

a responder group member, adapted to transmit the requested key information to the requester group member after receiving the key information request transmitted by the requester group member.

It is seen from the technical solutions provided by the disclosure that, by sharing group key messages or group key and/or auxiliary key between group members having neighbor relationships according to the disclosure, the reliability and availability of the distribution of the group key and/or auxiliary keys is improved and the bottleneck in the server performance and network bandwidth that may occur when all the group members obtain the key from the key server is avoided. As a result, the resource usage of the whole group system (such as network bandwidth, processing ability etc.) and the security of the multiparty communication data of the whole group system are improved.

### BRIEF DESCRIPTION OF THE DRAWING(S)

Fig. 1 is a diagram illustrating the LKH group key management scheme;

Fig. 2 is a flow chart illustrating an embodiment of a key distribution method based on key message sharing according to the disclosure;

Fig. 3 is a flow chart illustrating an embodiment of a key distribution method based on key sharing according to the disclosure;

Fig. 4 is a block diagram illustrating an embodiment of a key distribution system based on key message sharing according to the disclosure; and

Fig. 5 is a block diagram illustrating an embodiment of a key distribution system based on key sharing according to the disclosure.

### DETAILED DESCRIPTION

The disclosure provides a method and system of key sharing. In the disclosure, group key messages or a group key and/or an auxiliary key is/are shared between group members having a neighbor relationship; a part of abnormal group members obtain the group key and/or auxiliary key from normal group members, thereby avoiding asynchrony of the group key and/or auxiliary key with that of the normal group members.

The method of the disclosure includes two implementation solutions based on key message sharing and key sharing.

The implementation solution based on key sharing involves: a group member which has received a request verifies the identity of the group member initiating the request and checks the key group content access permission of the group member initiating the request. Then the group member which has received the request transmits directly the group key and/or auxiliary key in encryption to the group member initiating the request.

The implementation solution based on key message sharing involves: the group member which has received the request can not verify the identity of the group member initiating the request; In contrast, the group member which has received the request can only forward the key messages from the key server to the group member initiating the request.

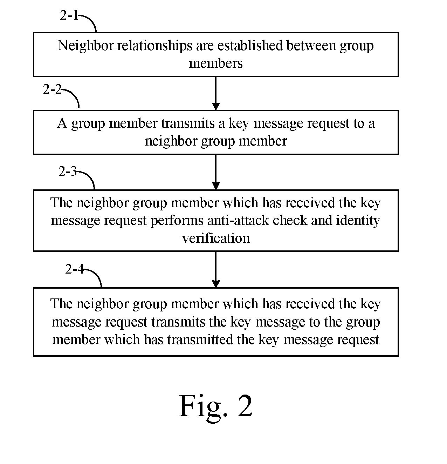

In the following, the disclosure will be described in detail with reference to the figures. The flow chart of an embodiment of the method of key sharing based on key message sharing according to the disclosure is shown in Fig. 2 and involves the following steps:

Step 2-1: Neighbor relationships are established between group members.

First, neighbor relationships must be established between the group members, group members between which neighbor relationships have been established may communicate with each other. In the disclosure, it is not required that a neighbor relationship is established between every two of all the group members. It is allowed that the neighbor relationships exist among only part of the group members.

The neighbor relationships may be established through a key server or other means.

Step 2-2: A group member transmits a key message request to a neighbor group member.

After the neighbor relationships among group members have been established, the group key messages transmitted by the key server may not be received by a group member due to network failure, packet loss, short time offline etc. and it may be found that the group key and/or auxiliary key of the group member is/are asynchronous to that of the other members. In this case, the group member transmits a key message request to a neighbor group member and requests the neighbor group member to transmit a key message carrying the corresponding group key and/or auxiliary key.

The group member may transmit the key message request to a plurality of neighbor group members at the same time or in turn.

Step 2-3: The neighbor group member which has received the key message request performs anti-attack check and identity verification.

Upon receiving the key message request, the neighbor group member first performs anti-DOS attack check on the group member which has transmitted the key message request, in order to prevent malicious group members from DOS-attacking the other group members using the request message. If the anti-DOS-attack check fails, the processing of the key message request is stopped.

After the anti-DOS attack check succeeds, identity verification is performed on the group member who has transmitted the key message request. If the identity verification fails, the processing of the key message request is stopped. If the identity verification succeeds, step 2-4 is executed.

Step 2-4: The neighbor group member which has received the key message request transmits the key message to the group member which has transmitted the key message request.

After the anti-DOS attack check succeeds, the neighbor group member which has received the key message request checks whether the key message requested by the group member which has transmitted the key message request is saved in a local buffer.

If the key message requested by the group member which has transmitted the key message request is in the local buffer, the key message is transmitted to the group member which has transmitted the key message request. Upon receiving the key message, the group member which has transmitted the key message request obtains the group key and/or auxiliary key by decrypting the key message and performs corresponding processing.

If the key message requested by the group member which has transmitted the key message request is not in the local buffer, the group member which has transmitted the key message request is informed that the requested key message does not exist.

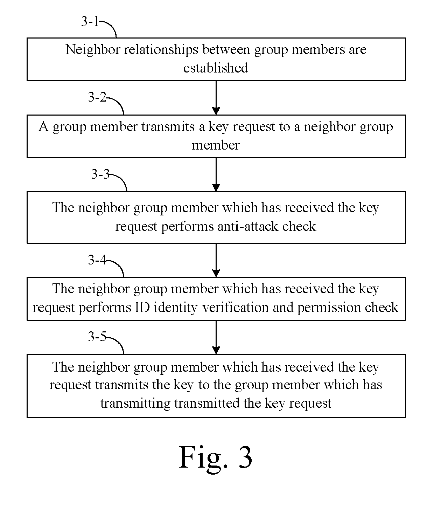

A flow chart of an embodiment of the method of key sharing based on key sharing according to the disclosure is shown in Fig. 3. The method includes the following steps.

Step 3-1: Neighbor relationships between group members are established.

First, neighbor relationships must be established between group members, group members between which neighbor relationships have been established may communicate with each other. In the disclosure, it is not required that a neighbor relationship is established between every two of all the group members. It is allowed that the neighbor relationships exist among only part of the group members.

The neighbor relationship may be established through a key server or other means.

Step 3-2: A group member transmits a key request to a neighbor group member.

After the neighbor relationships among group members have been established, the group key messages transmitted by the key server may not be received by a group member due to network failure, packet loss, short time offline etc. and it may be found that the group key and/or auxiliary key of the group member is/are asynchronous to that of the other members. In this case, the group member transmits a key request to a neighbor group member having a neighbor relationship with it and requests the neighbor group member to transmit the corresponding group key and/or auxiliary key to the group member. The group member's identity authentication and key group content access permission information is also carried in the key request.

The group member may transmit the key request to a plurality of neighbor group members at the same time or in turn.

Step 3-3: The neighbor group member which has received the key request performs anti-attack check.

Upon receiving the key request, the neighbor group member first performs anti-DOS attack check, in order to prevent malicious group members from DOS-attacking the other group members using the request message. If the anti-DOS attack check fails, the processing of the key request is stopped. If the anti-DOS attach check succeeds, step 3-4 is executed.

Step 3-4: The neighbor group member which has received the key request performs identity verification and permission check.

After the anti-DOS attack check succeeds, the neighbor group member performs identity verification on the group member which has transmitted the key request using the identity authentication information carried in the received key request. If the identity verification fails, the processing of the received key message request is stopped. If the identity verification succeeds, it continues to check whether the group member which has transmitted the key request has the key access permission according to the key group content access permission information carried in the received key request.

If the key access permission check fails, the neighbor group member which has received the key request stops processing the received key request and informs the group member which has transmitted the key request that the group member which has transmitted the key request does not have valid permission. If the key access permission check succeeds, step 3-5 is executed.

Step 3-5: The neighbor group member which has received the key request transmits the key to the group member which has transmitted the key request.

The neighbor group member which has received the key request checks whether the key and/or auxiliary key requested by the group member which has transmitted the key request is/are saved in the local buffer.

If the key and/or auxiliary key requested by the group member which has transmitted the key request is/are in the local buffer, the key and/or auxiliary key is/are transmitted in encryption to the group member which has transmitted the key request. Upon receiving the key and/or auxiliary key, the group member which has transmitted the key request performs corresponding processing.

If the key and/or auxiliary key requested by the group member which has transmitted the key request is/are not saved in the local buffer, the group member which has transmitted the key request is informed that the requested key and/or auxiliary key does/do not exist.

In the processing procedure of the embodiment based on key sharing or key message sharing, in order to prevent group key asynchrony between group members from occurring and for security reasons, neighbor group members should be restrained from requesting the eliminated group key and/or auxiliary key or the corresponding key messages. Therefore, the administrator is required to configure corresponding strategies. In the case that it is found by a group member that a neighbor group member is requesting an eliminated group key and/or auxiliary key or the corresponding group key messages, the group member should inform the neighbor group member that the group key and/or auxiliary key or the corresponding group key messages have been eliminated, no matter whether the group member transmits the group key and/or auxiliary key or the corresponding group key messages to the neighbor group member or not. The neighbor group member is thus informed that it should request the latest group key and/or auxiliary key or the corresponding group key messages. For security reasons, the security of the information should be ensured by some verification mechanism.

The methods of the disclosure may be used in combination with prior art methods for ensuring reliability of key message distribution, so as to improve the reliability of key distribution.

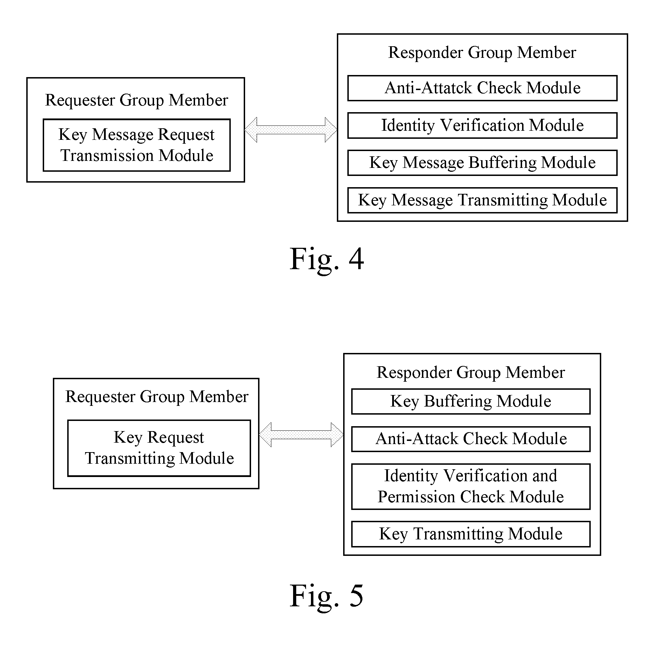

A block diagram of an embodiment of a key distribution system based on key message sharing according to the disclosure is shown in Fig. 4. The system includes the following modules.

A requester group member, which includes a key message request transmitting module. The key message request transmitting module is adapted to transmit a key message request to one or more responder group members having a neighbor relationship with the requester group member and request the responder group member to transmit a key message carrying the group key and/or auxiliary key to the requester group member, when it is found by the requester group member that its group key and/or auxiliary key is/are asynchronous with that of the other group members.

A responder group member, which is adapted to perform anti-attack check, identity verification on the requester group member, and then transmit the requested key message to the requester group member, upon receiving the key message request transmitted by the requester group member. The responder group member includes a key message buffering module, an anti-attack check module, an identity verification module and a key message transmitting module.

In the responder group member, the key message buffering module is adapted to buffer the key messages distributed by a key server.

In the responder group member, the anti-attack check module is adapted to perform anti-DOS attack check on the group member after receiving the key message request transmitted by the group member, in order to prevent malicious group members from DOS-attacking using the request message. When the anti-DOS attack check fails, the processing of the key message request is stopped.

In the responder group member, the identity verification module is adapted to perform identity verification on the requester group member after receiving the key message request transmitted by the requester group member. When the identity verification fails, the processing of the key message request is stopped.

In the responder group member, the key message transmission module is adapted to obtain the key message requested by the requester group member from the key message buffering module and transmit it to the requester group member, after the anti-DOS attack check, identity verification on the group member which has transmitted the key message request succeeds.

A block diagram of an embodiment of a key distribution system based on key sharing according to the disclosure is shown in Fig. 5. The system includes the following modules.

A requester group member, which includes a key request transmission module. The key request transmission module is adapted to transmit a key request carrying the identity authentication and key group content access permission information to one or more responder group members having a neighbor relationship with the requester group member and request the responder group member to transmit a group key and/or auxiliary key to the requester group member, after it is found by the requester group member that its group key and/or auxiliary key is/are asynchronous with that of the other group members.

A responder group member, which is adapted to perform anti-attack check, identity verification and permission check on the requester group member, and transmit the requested key to the requester group member, upon receiving the key request transmitted by the requester group member. The responder group member includes a key buffering module, an anti-attack check module, an identity verification and permission check module and a key transmission module.

In the responder group member, the key buffering module is adapted to buffer the group key and/or auxiliary key distributed by the key server.

In the responder group member, the anti-attack check module is adapted to perform anti-DOS attack check on the requester group member after receiving the key request transmitted by the requester group member, in order to prevent malicious group member from DOS-attacking using the request message. When the anti-DOS attack check fails, the processing of the key request is stopped.

In the responder group member, the identity verification and permission check module is adapted to perform identity verification on the requester group member according to the identity authentication information carried in the key request. If the identity verification fails, the processing of the received key request is stopped. If the identity verification succeeds, it continues to check whether the requester group member has the key access permission, according to the key group content access permission information carried in the received key request. If the permission check fails, the processing of the key request is stopped and the requester group member is informed that the requester group member does not have valid permission.

In the responder group member, the key transmission module is adapted to obtain the group key and/or auxiliary key requested by the requester group member from the key buffering module and transmit it to the requester group member, after the anti-DOS attack check, identity verification and permission check on the requester group member which has transmitted the key request succeeds.

What are described above are only preferred embodiments of the disclosure, and are not intended to limit the scope of the disclosure. Any modification, equivalent substitution and improvement within the spirit and scope of the disclosure are intended to be included in the scope of the disclosure.

## Claims

1. A method for key sharing, comprising:
transmitting, by a group member, a key information request to a neighbor group member; and
transmitting, by the neighbor group member, the requested key information to the group member, upon receiving the key information request.

2. The method of claim 1, wherein the key information request comprises:
at least one of a key message request and a key request.

3. The method of claim 2, wherein when the key information request is a key message request, the step of transmitting a key information request to a neighbor group member by a group member comprises:
transmitting the key message request to one or more neighbor group members and requesting the one or more neighbor group members to transmit a key message carrying a group key and/or an auxiliary key to the group member, when the group member finds that its group key and/or auxiliary key is/are asynchronous with that of the other group members.

4. The method of claim 3, wherein the step of transmitting the requested key information to the group member by the neighbor group member, upon receiving the key information request comprises:
performing identity verification on the group member which transmits the key message request after the one or more neighbor group members receives the key message request, and stopping processing the key message request when the identity verification fails; and
when the identity verification succeeds, transmitting the requested key message to the group member which transmits the key message request, if the requested key message exists in the neighbor group member; and informing the group member which transmits the key message request that the requested key message does not exist, if the requested key message does not exist in the neighbor group member.

5. The method of claim 4, further comprising the following steps before performing identity verification on the group member which transmits the key message request:
upon receiving the key message request, performing, by the neighbor group member, anti-attack check on the group member which transmits the key message request; and
stopping the processing of the key message request, if the anti-attack check fails; and performing identity verification on the group member which transmits the key message request, if the anti-attack check succeeds.

6. The method of claim 2, wherein when the key information request is a key request, the step of transmitting a key information request to a neighbor group member by a group member comprises:
transmitting the key request carrying requested group key and/or auxiliary key information to one or more neighbor group members and carrying its identity authentication and key group content access permission information in the key request, when the group member finds that its group key and/or auxiliary key being asynchronous to that of the other group members.

7. The method of claim 6, wherein the step of transmitting the requested key information to the group member by the neighbor group member upon receiving the key information request comprises:
performing identity verification on the group member which transmits the key request, according to the identity authentication information carried in the key request; and performing permission check on the group member which transmits the key request, according to the key group content access permission information carried in the key request, after the identity verification succeeds; and
after the permission check succeeds, transmitting the requested group key and/or auxiliary key to the group member which transmits the key request, if the requested group key and/or auxiliary key exist(s) in the neighbor group member; and informing the group member which transmits the key request that the requested group key and/or auxiliary key does/do not exist, if the requested key does not exist in the neighbor group member.

8. The method of claim 7, further comprising the following steps before performing identity verification on the group member which transmits the key request:
upon receiving the key request, performing, by the neighbor group member, anti-attack check on the group member which transmits the key request; stopping processing the key request, if the anti-attack check fails; and performing identity verification on the group member which transmits the key request, if the anti-attack check succeeds.

9. The method of claim 4 or 7, further comprising:
transmitting, by the neighbor group member, notification information to the group member, when the neighbor group member finds that the key message or key requested by the group member is not the latest key message or key; or transmitting the latest key message or key directly to the group member.

10. A key sharing system, comprising:
a requester group member, adapted to transmit a key information request to a responder group member having a neighbor relationship with the requester group member; and
a responder group member, adapted to transmit the requested key information to the requester group member after receiving the key information request transmitted by the requester group member.

11. The system of claim 10, wherein the responder group member comprises:
a key message buffering module, adapted to buffer key messages distributed by a key server;
an identity verification module, adapted to perform identity verification on the requester group member upon receiving the key message request transmitted by the requester group member; and to stop the processing of the key message request when the identity verification fails; and
a key message transmission module, adapted to obtain the key message requested by the requester group member from the key message buffering module and transmit the key message to the requester group member, when the identity verification on the requester group member succeeds.

12. The system of claim 11, wherein the responder group member further comprises:
an anti-attack check module, adapted to perform anti-attack check on the requester group member after receiving the key message request transmitted by the requester group member; when the anti-attack check fails, the processing of the key message request is stopped.

13. The system of claim 10, wherein the responder group member comprises:
a key buffering module, adapted to buffer a received group key and/or an auxiliary key distributed by a key server;
an identity verification and permission check module, adapted to perform identity verification on the requester group member according to identity authentication information carried in the received key request; when the identity verification fails, the processing of the key request is stopped; and to perform permission check on the requester group member, according to key group content access permission information carried in the received key request; when the permission check fails, the processing of the key request is stopped; and
a key transmission module, adapted to obtain the group key and/or auxiliary key requested by the requester group member from the key buffering module and transmit the group key and/or auxiliary key to the requester group member, after the identity verification and permission check on the requester group member succeeds.

14. The system of claim 13, wherein the responder group member further comprises:
an anti-attack check module, adapted to perform anti-attack check on the requester group member after receiving the key request transmitted by the requester group member; and to stop the processing of the key request when the anti-attack check fails.
